# FASCICULE DE BREVET EUROPEEN

(11) **EP 0 560 675 B1**
(45) Date de publication et mention de la délivrance du brevet: **02.08.1995**
(21) Numéro de dépôt: 93400611.5
(22) Date de dépôt: 10.03.1993
(51) Int. Cl.: B23P 15/24, B05D 5/08, A47J 36/02

(54) **Procédé de préparation d'une surface pour l'accrochage d'un revêtement**
Vorbereitungsverfahren für eine Fläche zur Haftung einer Verkleidung
Process for preparing a surface for the bonding of a coating

(30) Priorité: 13.03.1992 FR 9203029
(43) Date de publication de la demande: 15.09.1993
(73) Titulaire: SEB S.A., F-21260 Selongey (FR)
(72) Inventeur: Coudurier, Alain, F-73410 Albens (FR)
(74) Mandataire: Keib, Gérard

(56) Documents cités:
- EP-A- 0 259 056
- EP-A- 0 389 966
- DE-C- 3 120 351
- FR-A- 2 026 575
- US-A- 3 008 601
- PATENT ABSTRACTS OF JAPAN vol. 011, no. 010 (M-552)10 Janvier 1987 & JP-A-61 186 111 (KOBE STEEL LTD) 19 Aout 1986
- PATENT ABSTRACTS OF JAPAN vol. 014, no. 305 (M-992)29 Juin 1990 & JP-A-20 99 208 (NIPPON STEEL CORP) 11 Avril 1990

## Description

La présente invention concerne un procédé de préparation d'une surface métallique gour permettre l'accrochage d'un revêtement sur cette dernière. Voir par exemple US-A-3 008 601.

L'invention vise en particulier à améliorer l'accrochage d'un revêtement en polytétrafluoréthylène sur la surface d'un récipient culinaire embouti.

Le procédé classique pour permettre l'accrochage du polytétrafluoréthylène (PTFE) sur une plaque en aluminium destinée à être emboutie sous la forme d'un récipient culinaire, consiste à soumettre cette plaque à une attaque acide. Cette dernière permet de réaliser sur la surface de la plaque en aluminium une multitude de microcavités assurant un excellent accrochage du revêtement en PTFE.

On connaît également un procédé consistant à appliquer d'abord sur la plaque préalablement sablée, une couche primaire d'accrochage à laquelle on applique une ou plusieurs couches de PTFE adhérant parfaitement et directement à la couche primaire.

Le but de la présente invention est de proposer un procédé de préparation d'une surface métallique permettant d'améliorer l'accrochage d'un revêtement tel qu'un revêtement de PTFE.

Suivant l'invention, ce procédé est caractérisé par les étapes suivantes :
a) on grave sur une matrice en métal dur une série de motifs en relief séparés par des espaces en creux, cette gravure ayant pour effet de créer des microcavités dans le métal adjacent auxdits espaces en creux.
b) on applique par frappe ladite matrice sur un disque en métal moins dur que celui de la matrice pour imprimer les motifs en relief et les microcavités de cette dernière sur la surface de ladite plaque.

Les motifs en relief et les microcavités imprimés sur la plaque permettent d'obtenir un excellent accrochage d'un revêtement, notamment en PTFE.

Ce procédé présente notamment l'avantage d'éviter l'attaque acide de la plaque ou l'application d'une couche primaire.

De plus, l'impression des motifs, réalisée par frappe sur la surface de la plaque, permet d'améliorer la résistance à l'usure de cette surface. Cette propriété est importante notamment dans le cas d'une plaque en aluminium qui est en métal relativement mou donc sensible aux rayures.

La matrice est de préférence en acier. Une telle matrice, grâce à sa dureté, peut être utilisée pour imprimer par frappe un très grand nombre de plaques en aluminium.

De préférence, après l'étape b), on soumet la surface de la plaque comportant les motifs imprimés en creux, à un sablage.

Ce sablage a pour effet de refermer partiellement les microcavités imprimées dans la plaque, ce qui améliore leur aptitude à accrocher le revêtement en PTFE ou analogue.

Selon une version avantageuse de l'invention, après le sablage, la surface est nettoyée au moyen d'une lessive alcaline.

Cette lessive alcaline élimine les grains de sable subsistant après l'étape précédente et creuse davantage les microcavités.

Lorsque le procédé selon l'invention est appliqué à la réalisation d'un ustensile culinaire, la plaque est emboutie en forme de récipient après l'étape précitée, c'est-à-dire avant l'opération de sablage et avant nettoyage à la lessive alcaline.

D'autres particularités et avantages de l'invention apparaîtront encore dans la description ci-après.

Aux dessins annexés, donnés à titre d'exemples non limitatifs :
- la figure 1 est une vue en plan partielle d'une matrice portant un masque, après attaque chimique,
- la figure 2 est une vue en coupe suivant le plan II-II de la figure 1,
- la figure 3 est un vue à échelle agrandie du détail A de la figure 2,
- la figure 4 est une vue en coupe d'un disque de métal après l'application par frappe de la matrice,
- la figure 5 est une vue à échelle agrandie du détail B de la figure 4,
- la figure 6 est une vue en coupe de la plaque emboutie sous la forme de récipient culinaire, soumise à un sablage,
- la figure 7 est une vue à échelle agrandie du détail C de la figure 6, après application d'un revêtement en polytétrafluoréthylène.

On va maintenant décrire le procédé selon l'invention appliqué à la réalisation d'un ustensile culinaire.

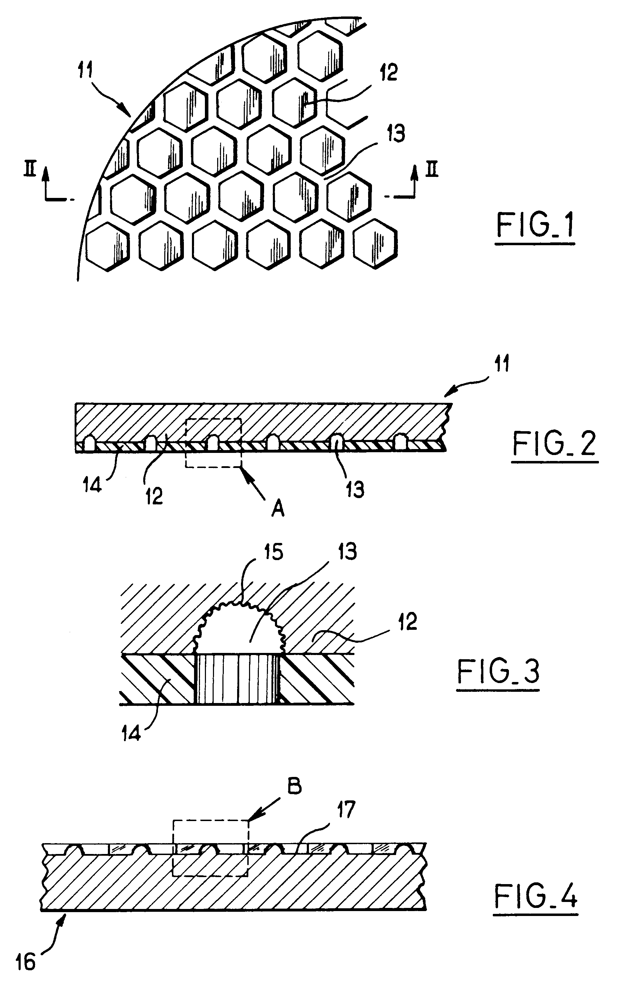

On applique sur une matrice 11 en acier, représentée sur la figure 1, un masque 14 reproduisant les contours des motifs en relief 12. Le masque 14 laisse libre les parties du métal correspondant à des espaces en creux 13 que l'on va graver par attaque chimique. Le masque 14 est obtenu par exemple par un procédé classique de photogravure.

La matrice 11 recouverte du masque 14 est soumise à une attaque chimique, au moyen d'acide nitrique par exemple, ayant pour effet de creuser dans le métal les espaces libres et de former les espaces en creux 13, représentés sur la figure 2, et des microcavités 15 illustrées par la figure 3. Les motifs 12 de la matrice 11 sont de forme hexagonale et ont de préférence une dimension comprise entre 1 et 3 mm et une hauteur de 0,5 à 2 mm environ. Les espaces 13 compris entre ces motifs 12 ont une largeur de 0,5 à 2 mm environ.

Après enlèvement du masque 14, la matrice 11 est appliquée par frappe sur une plaque de métal 16, en métal moins dur que celui de la matrice 11, et plus particulièrement en aluminium. Le procédé de frappe met en jeu classiquement un poids de l'ordre de 1 000 tonnes.

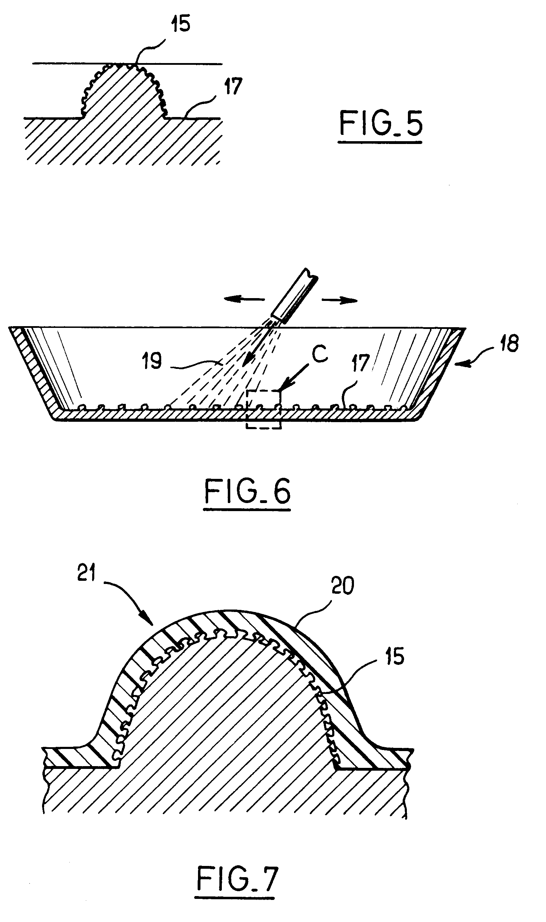

Sur la surface 17 de la plaque 16 sont ainsi imprimés en creux les motifs en relief 12, représentés sur la figure 4, et les microcavités 15, illustrées sur la figure 5.

La plaque 16, obtenue conformément au procédé selon l'invention, est ensuite emboutie sous la forme d'un récipient culinaire 18, représenté sur la figure 6.

La surface intérieure 7 du récipient 18 est soumis à un sablage 19 ayant pour effet de refermer partiellement les microcavités 15 imprimées sur la surface 17.

Le sablage 19 améliore le procédé selon l'invention, en particulier l'aptitude de la surface 17 à accrocher le revêtement en PTFE 20.

La surface 17 du récipient 18 est ensuite nettoyée au moyen d'une lessive alcaline ayant pour effet de supprimer le sable subsistant dans les microcavités 15 et d'agrandir ces dernières.

Le revêtement en PTFE 20 est ensuite projeté sur la surface 17 du récipient 18. L'accrochage du revêtement en PTFE 20 représenté sur la figure 7, est amélioré par le procédé selon l'invention, particulièrement au niveau des microcavités 15 imprimées sur la surface 17 du récipient 18.

La matrice 11 utilisée dans le procédé selon l'invention, présente l'avantage, par le choix de la forme hexagonale des motifs en relief, d'offrir une large surface de contact lors de la frappe de la plaque 16.

Les risques de glissement lors du contact de la matrice 11 et de la surface 17 sont ainsi minimisés et n'entravent pas la formation des microcavités 15 sur la surface 17 de la plaque 16.

De plus, la plaque 16 est considérablement durcie lors du procédé de frappe sur la quasi-intégralité de sa surface 17.

Les reliefs 21 de la surface 17 permettent d'améliorer la résistance à l'usure du revêtement de PTFE 20, en particulier lors de l'utilisation d'un objet coupant sur la surface 17, en limitant les points d'usure aux reliefs 21.

Enfin, les reliefs 21 sur la plaque 16 permettent également de diminuer la surface de contact des aliments avec la surface 17 du récipient culinaire 18 lors de son utilisation et de renforcer ainsi la qualité de non-adhérence du revêtement 20 en PTFE.

Bien entendu, l'invention n'est pas limitée à l'exemple de réalisation que l'on vient de décrire et on peut apporter à celui-ci de nombreuses modifications sans sortir du cadre de l'invention.

On peut ainsi utiliser la matrice 11 avec des motifs en relief 12 de forme différente.

On peut également former d'abord sur la matrice 11 une série de motifs 12 répétitifs en relief, puis appliquer sur cette matrice 11 un masque 14 recouvrant les motifs 12 en relief et laissant libres les espaces en creux 13 compris entre ces motifs. L'ensemble est ensuite soumis à une attaque chimique qui a pour effet de creuser dans le métal adjacent aux espaces en creux 13 des microcavités 15.

On peut aussi graver la matrice par électroérosion. On utilise une électrode métallique qui a une surface comportant des reliefs et des creux inversés par rapport à la gravure que l'on souhaite former sur la matrice. Cette électrode est placée en regard de la matrice et est portée à haute tension. Des micro-arcs électriques se forment entre l'électrode et la matrice, créant de manière connue dans la matrice des creux, séparant des motifs en relief, et des microcavités. Ce procédé permet, en variant la tension appliquée à l'électrode, de régler les dimensions des microcavités.

## Revendications

1. Procédé de préparation d'une surface métallique (17) pour permettre l'accrochage d'un revêtement (20) sur cette dernière, caractérisé par les étapes suivantes :
a) on grave sur une matrice (11) en métal dur une série de motifs (12) en relief séparés par des espaces en creux (13), cette gravure ayant pour effet de créer des microcavités (15) dans le métal adjacent auxdits espaces en creux (13) ;
b) on applique par frappe ladite matrice (11) sur un disque (16) en métal moins dur que celui de la matrice (11) pour imprimer les motifs en relief (12) et les microcavités (15) de cette dernière sur la surface (17) de ladite plaque (16).

2. Procédé conforme à la revendication 1, caractérisé en ce que la gravure de la matrice (11) est réalisée par attaque chimique.

3. Procédé conforme à la revendication 1, caractérisé en ce que la gravure de la matrice (11) est réalisée par électroérosion.

4. Procédé conforme à la revendication 2 caractérisé en ce que lesdits motifs en relief (12) sont formés en appliquant sur la matrice (11) un masque (14) reproduisant les contours des motifs à graver, ledit masque (14) laissant libres les parties du métal correspondant auxdits espaces en creux (13) à graver.

5. Procédé conforme à la revendication 1, caractérisé en ce que la matrice (11) est en acier.

6. Procédé conforme à la revendication 1, caractérisé en ce que la plaque (16) est en aluminium.

7. Procédé conforme à l'une des revendications 1 à 6, caractérisé en ce qu'après l'étape b), on soumet la surface (17) de la plaque (16) comportant les motifs (12) imprimés en creux, à un sablage (19).

8. Procédé conforme à la revendication 7, caractérisé en ce qu'après le sablage (19), la surface (17) est nettoyée au moyen d'une lessive alcaline.

9. Procédé conforme à l'une des revendications 1 à 8, caractérisé en ce qu'on applique sur la surface (17) de la plaque (16) comportant les motifs (12) traités en creux, un revêtement en polytétrafluoréthylène (20).

10. Procédé conforme à l'une des revendications 1 à 9, caractérisé en ce que les motifs en relief (12) de la matrice (11) ont une dimension comprise entre 1 et 3 mm, les espaces (13) compris entre ces motifs ayant une largeur comprise entre 0,5 et 2 mm environ.

11. Procédé conforme à la revendication 10, caractérisé en ce que la hauteur des motifs en relief (12) est comprise entre 0,5 et 2 mm environ.

12. Procédé conforme à l'une des revendications 1 à 11, appliqué à la réalisation d'un ustensile culinaire, caractérisé en ce que la plaque est emboutie en forme de récipient (18), après l'étape b).

## Claims

1. A process for the preparation of a metal surface (17) to provide keying for a coating (20) thereon, characterised by the following steps:
a) a series of relief patterns (12) separated by recesses (13) is engraved on a hard metal matrix (11), the effect of such engraving being to create microcavities (15) in the metal adjacent the recesses (13);
b) the said matrix (11) is hammered on to a disc (16) of a metal which is softer than the matrix (11) in order to imprint the relief patterns (12) and the microcavities (15) of the matrix on the surface (17) of the plate (16).

2. A process according to claim 1, characterised in that the matrix (11) is engraved by chemical attack.

3. A process according to claim 1, characterised in that the matrix (11) is engraved by electro-erosion.

4. A process according to claim 2, characterised in that the said relief patterns (12) are formed by applying to the matrix (11) a mask (14) which reproduces the contours of the patterns for engraving, the said mask (14) leaving free those parts of the metal which correspond to the said recesses (13) for engraving.

5. A process according to claim 1, characterised in that the matrix is made of steel.

6. A process according to claim 1, characterised in that the plate (16) is made of aluminium.

7. A process according to any one of claims 1 to 6, characterised in that after step b) the surface (17) of the plate (16) containing the recessed patterns (12) is sand-blasted (19).

8. A process according to claim 7, characterised in that after the sandblasting (19) the surface (17) is cleaned by means of an alkaline wash.

9. A process according to any one of claims 1 to 8, characterised in that a polytetrafluoroethylene coating (20) is applied to the surface (17) of the plate (16) containing the recessed patterns (12).

10. A process according to any one of claims 1 to 9, characterised in that the relief patterns (12) of the matrix (11) have a size of between 1 and 3 mm, the spaces (13) between said patterns having a width of between about 0.5 and 2 mm.

11. A process according to claim 10, characterised in that the height of the relief patterns (12) is between about 0.5 and 2 mm.

12. A process according to any one of claims 1 to 11, applied to the production of a kitchen utensil, characterised in that the plate is stamped into the form of a container (18) after step b).

## Patentansprüche

1. Verfahren zum Vorbereiten einer metallischen Oberfläche (17), um das Verankern einer Beschichtung (20) an der Oberfläche zu ermöglichen, gekennzeichnet durch die folgenden Schritte:
a) auf einer Matrize (11) aus einem harten Metall wird eine Reihe von erhabenen Motiven (12) graviert, die durch vertiefte Zwischenräume (13) getrennt sind, wobei diese Gravur in dem Metall das Erzeugen von an die vertieften Zwischenräume (13) angrenzenden Mikrohohlräumen (15) bewirkt;
b) die Matrize (11) wird auf eine Scheibe (16) aus einem Metall gepreßt, welches weniger hart als dasjenige der Matrize (11) ist, um die erhabenen Motive (12) und deren Mikrohohlräume (15) in die Oberfläche (17) der Platte (16) einzudrücken.

2. Verfahren nach Anspruch 1, dadurch gekennzeichnet, daß das Gravieren der Matrize (11) durch chemisches Ätzen erzielt wird.

3. Verfahren nach Anspruch 1, dadurch gekennzeichnet, daß das Gravieren der Matrize (11) durch Elektroerosion erzielt wird.

4. Verfahren nach Anspruch 2, dadurch gekennzeichnet, daß die erhabenen Motive (12) durch das Aufbringen einer Maske (14) auf die Matrize (11) gebildet werden, welche die Konturen der zu gravierenden Motive reproduziert, wobei die Maske (14) die Teile des Metalls frei läßt, die den zu gravierenden vertieften Zwischenräumen (13) entsprechen.

5. Verfahren nach Anspruch 1, dadurch gekennzeichnet, daß die Matrize (11) aus Stahl ist.

6. Verfahren nach Anspruch 1, dadurch gekennzeichnet, daß die Platte (16) aus Aluminium ist.

7. Verfahren nach einem der Ansprüche 1 bis 6, dadurch gekennzeichnet, daß nach dem Schritt b) die die vertieft eingedrückten Motive (12) tragende Oberfläche (17) der Platte (16) einem Sandstrahlen (19) ausgesetzt wird.

8. Verfahren nach Anspruch 7, dadurch gekennzeichnet, daß die Oberfläche (17) nach dem Sandstrahlen (19) mittels einer Alkalilauge gereinigt wird.

9. Verfahren nach einem der Ansprüche 1 bis 8, dadurch gekennzeichnet, daß auf die die vertieft ausgebildeten Motive (12) tragende Oberfläche (17) der Platte (16) eine Beschichtung (20) aus Polytetrafluorethylen aufgebracht wird.

10. Verfahren nach einem der Ansprüche 1 bis 9, dadurch gekennzeichnet, daß die erhabenen Motive (12) der Matrize (11) Abmessungen zwischen 1 und 3 mm aufweisen, wobei die Zwischenräume (13) zwischen diesen Motiven eine Breite ungefähr zwischen 0,5 und 2 mm aufweisen.

11. Verfahren nach Anspruch 10, dadurch gekennzeichnet, daß die Höhe der erhabenen Motive (12) ungefähr zwischen 0,5 und 2 mm beträgt.

12. Verfahren nach einem der Ansprüche 1 bis 11, angewendet auf das Herstellen eines Küchengeräts, dadurch gekennzeichnet, daß die Platte nach dem Schritt b) in die Form des Behälters (18) gezogen wird.
